# EUROPÄISCHE PATENTSCHRIFT

(11) **EP 2 248 688 B1**
(45) Veröffentlichungstag und Bekanntmachung des Hinweises auf die Patenterteilung: **09.10.2013**
(21) Anmeldenummer: 10002977.6
(22) Anmeldetag: 20.03.2010
(51) Int. Cl.: B60D 1/14, B60D 1/145

(54) **Abschleppvorrichtung**
Towing device
Dispositif de remorquage

(30) Priorität: 07.05.2009 DE 202009006554 U
(43) Veröffentlichungstag der Anmeldung: 10.11.2010
(73) Patentinhaber: Rehau AG & Co, 95111 Rehau (DE)
(72) Erfinder: Michel, Peter, 95028 Hof (DE); Wendel, Bettina, 90482 Nürnberg (DE)

(56) Entgegenhaltungen:
- EP-A2- 0 160 934
- WO-A1-2006/050558
- DE-A1- 3 416 631
- DE-A1- 3 703 626
- DE-A1- 10 164 413
- DE-A1-102005 056 578
- DE-A1-102007 001 969
- DE-C1- 4 441 460
- DE-U1-202007 007 313

## Beschreibung

Die vorliegende Erfindung betrifft eine Abschleppvorrichtung für ein Kraftfahrzeug mit einem Schaft und einer Schaftaufnahme, wobei der Schaft lösbar mit der Schaftaufnahme verbindbar ist, ein Karosserieelement mit einer Abschleppvorrichtung und ein Kraftfahrzeug.

Eine Abschleppvorrichtung ist eine an einer Fahrzeugkarosserie bzw. einer an der Fahrzeugkarosserie befestigten Komponente vorgesehene Baugruppe, an der sich eine Abschleppöse befindet bzw. montiert werden kann. Zum Abschleppen eines Kraftfahrzeuges wird an der montierten Abschleppöse ein Abschleppseil oder eine Abschleppstange befestigt. Beim Abschleppvorgang werden die Zug- und Querkräfte über die Abschleppvorrichtung auf das Kraftfahrzeug übertragen.

Bekannte Abschleppvorrichtungen sind endseitig vorzugsweise mit dem Längsträger (bug- oder heckseitig) eines Kraftfahrzeugs verbunden. Um diesen Längsträger des Fahrzeuges vor einer Beschädigung zu schützen, sind in der Regel energieabsorbierende Elemente vorgesehen, die z.B. bei einem Heckaufprall die eingeleitete Energie teilweise bzw. ganz vernichten. Der benötigte "Crashweg" zur vollständigen Aufnahme der zu absorbierenden Energie wird jedoch durch die aus dem Stand der Technik bekannten Abschleppvorrichtungen verringert, sodass die Abschleppvorrichtung einen Großteil der Energie direkt an den Längsträger weitergibt. Die notwendige Aufnahme der Energie ist nicht mehr vollständig möglich, da beispielsweise das Zusammenfalten einer Crashbox verhindert wird. Aufgrund der Integration der Abschleppvorrichtung in das energieabsorbierende Element (Crashbox) ergibt sich im Crashfall ein unterschiedlicher Wirkungsgrad des energieabsorbierenden Elements je nachdem, ob die Abschleppvorrichtung getroffen wird oder nicht. Aufgrund der ungleichen Energieaufnahme des energieabsorbierenden Elements ergeben sich unterschiedliche Schäden im Falle eines Crashes. Selbst bei relativ geringen Aufprallgeschwindigkeiten können durch die Beschädigung des Längsträgers bzw. anderer tragender Teile der Karosserie erhebliche Reparaturkosten entstehen, die in Folge zu einer Hochstufung innerhalb der Versicherung des Kraftfahrzeugs führt.

Um das energieabsorbierende Element und dessen Verformungsvermögen vollständig nutzen zu können existieren daher Abschleppvorrichtungen, die seitlich bzw. unterhalb am Längsträger befestigt werden. Für die Anbringung der Abschleppvorrichtung wird jedoch ein zusätzliches Gehäuse benötigt, das ein zusätzliches unerwünschtes Gewicht darstellt. Zudem erschwert die Position einer derartigen Abschleppvorrichtung die Montage der Abschleppstange bzw. des Abschleppseils da der Benutzer tief unter das Fahrzeug greifen muss.

Die DE 199 02 478 C1 lehrt weiterhin eine Abschleppvorrichtung im Front- bzw. Heckbereich eines Kraftfahrzeuges mit einem festlegbaren Rohrbauteil zur Anbringung einer Abschleppöse. Das Rohrbauteil ist dabei so mit einem Querträger verbunden, dass es durch einen Aufpralldämpfer geführt und in dem diesen zugeordneten Längsträger relativ verschiebbar, jedoch momentenabgestützt lagerorientiert ist. Die Momentenabstützung für das Rohrbauteil wird dabei durch eine rechteckige Ausnehmung in einer Flanschplatte am Übergang vom Längsträger zum Aufpralldämpfer gebildet. Nachteilig ist, dass auftretende Momentenkräfte nur in einer Richtung aufgenommen werden können und das Rohrbauteil am sich beim Unfall verformenden Querträger befestigt werden muss.

Eine weitere gattungsgemäße Abschleppvorrichtung ist aus der DE 20 2007 007 313 U bekannt.

Die Erfindung stellt sich die Aufgabe, eine Abschleppvorrichtung mit den eingangs beschriebenen Merkmalen anzugeben, die gegenüber dem Stand der Technik einen weiter verbesserten betrieblichen Einsatz bei gleichzeitig verringertem Gewicht bzw. einer verbesserten Ausnutzung von energieabsorbierenden Elementen des Kraftfahrzeugs schafft.

Erfindungsgemäß wird diese Aufgabe durch die Merkmale des Anspruchs 1 gelöst. Die erfindungsgemäße Abschleppvorrichtung ist vorteilhaft so ausgebildet, dass erst bei der Verbindung von Schaft und Schaftaufnahme ein Form- und/oder Kraftschluss zwischen dem Gegenelement und dem Schaft hergestellt wird. Die Schaftaufnahme kann vorteilhafterweise rohrförmig ausgebildet sein. Die Schaftaufnahme ist vorzugsweise aus einem metallischen Werkstoff gebildet oder weiter vorzugsweise aus einem polymeren Werkstoff oder noch weiter vorzugsweise aus einem faserverstärkten polymeren Werkstoff gebildet. Für den Fall, dass das Fahrzeug nicht abgeschleppt werden muss bzw. kein anderes Fahrzeug abschleppt, können daher keine Kräfte von der Abschleppvorrichtung auf den Längsträger bzw. das energieabsorbierende Element des Kraftfahrzeugs übertragen werden. Im Fall eines Unfalls kann die auf z.B. eine Crashbox einwirkende Aufprallenergie vollständig absorbiert werden. Im Crashfall kann die Schaftaufnahme beispielsweise in das Profil des Längsträgers eintauchen und beeinträchtigt daher nicht die Energieaufnahme des energieabsorbierenden Elements.

Dabei kann das mindestens eine Verriegelungselement als Sperrkugel und/oder als Sperrstift ausgebildet sein. Die Sperrkugel bzw. der Sperrstift können das System von Schaft und Gegenelement miteinander verklemmen sobald Schaft und Schaftaufnahme miteinander verbunden werden. Die Sperrkugel bzw. der Sperrstift sind dabei so ausgebildet, dass sie aus der Aussparung der Schaftaufnahme vorzugsweise mindestens teilweise hervortreten sobald der Schaft mit der Schaftaufnahme verbunden wird, bzw. weiter vorzugsweise vollständig in der Aussparung aufgenommen werden können für den Fall, dass der Schaft nicht mit der Schaftaufnahme verbunden ist. Andernfalls kann die Gefahr bestehen, dass die Sperrkugel bzw. der Sperrstift im Crashfall in der zugeordneten Verriegelungselementaufnahme hängen bleiben.

Vorzugsweise weist der Schaft mindestens einen Vorsprung oder weiter vorzugsweise mindestens eine Querschnittsveränderung auf der/die das Verriegelungselement in der Aussparung verschiebt. Der Vorsprung und/oder die Querschnittsveränderung kann/können derart ausgebildet sein, dass dieser/diese das Verriegelungselement in der Aussparung verschiebt/en sobald der Schaft mit der Schaftaufnahme verbunden wird. Der Vorsprung und/oder die Querschnittsveränderung ist dabei an die Innenabmessung des vorzugsweise Rohr- oder Ringförmigen Gegenelements angepasst, so dass die Außenfläche des Schafts im Bereich des Vorsprungs bzw. der Querschnittsveränderung von der gegenüberliegenden Innenfläche der Schaftaufnahme vorzugsweise zwischen 0,1 mm bis 2 mm, weiter vorzugsweise zwischen 0,2 mm bis 0,5 mm beabstandet ist.

Das mindestens eine Verriegelungselement kann über mindestens ein Positionierelement innerhalb der Aussparung gehaltert sein. Vorzugsweise ist zusätzlich ein Positionierelement vorgesehen, welches zur Halterung des Verriegelungselementes dient, d.h. das Verriegelungselement so in der Aussparung der Schaftaufnahme haltert, dass das Verriegelungselement innerhalb der Aussparung, und teilweise aus der Aussparung heraus, verschiebbar ist, dabei jedoch nicht aus der Aussparung herausfallen kann (z.B. aufgrund der Gravitationskraft oder Querbeschleunigungen im Fahrbetrieb).

Es ist ein Führungselement vorgesehen sein, dass der Fixierung der Schaftaufnahme im normalen Fahrbetrieb dient. Das Führungselement kann vorzugsweise als eine Hülse oder weiter vorzugsweise als ein Ring ausgebildet sein. Das Führungselement fixiert die Schaftaufnahme im normalen Fahrbetrieb in seiner Position. Die Fixierung durch das Führungselement dient der Befestigung der Schaftaufnahme am Kraftfahrzeug während des normalen Fahrbetriebes, also für den Fall in dem kein Abschleppbetrieb vorliegt, das Kraftfahrzeug also werden abgeschleppt wird oder selbst ein anderes Kraftfahrzeug abschleppt und daher der Schaft nicht mit der Schaftaufnahme verbunden ist. Das Führungselement kann insbesondere als energieabsorbierendes Element ausgebildet sein.

Die Fixierung der Schaftaufnahme in dem Führungselement ist über ein Verbindungsmittel derart realisiert, dass das Verbindungsmittel im normalen Fahrbetrieb des Kraftfahrzeugs die Schaftaufnahme in dem Führungselement fixiert und im Crashfall das Verbindungsmittel eine Sollbruchstelle bildet. Die durch das Verbindungsmittel realisierte Fügeverbindung weist daher eine geringe Verbindungsfestigkeit auf. Die typischerweise bei einem Crash auftretenden Kräfte führen dann zu einem Lösen der Fügeverbindung bzw. des Verbindungsmittels. Die Schaftaufnahme kann dann vorzugsweise durch das Führungselement hindurch gleiten

Das Verbindungsmittel kann eine Klebstoffschicht und/oder ein Dichtring und/oder eine Einsteckhülse und/oder eine Klipsverbindung und/oder ein Kunststoffgewinde und/oder eine Lötung sein. Die Verbindungsmittel weisen vorzugsweise eine geringe Eigenfestigkeit auf, so dass die durch das Verbindungsmittel gebildete Fügeverbindung zwischen Schaftaufnahme und Führungselement mit einer, gegenüber dem Crashfall, geringen einwirkenden Kraft gelöst werden kann.

Das Führungselement kann mit dem Gegenelement verbunden sein. Vorzugsweise sind das Führungselement und das Gegenelement stoffschlüssig miteinander verbunden, weiter vorzugsweise einstückig ausgebildet. Durch die Verbindung von Gegenelement und Führungselement ergibt sich eine Funktionsintegration die eine Vereinfachung der Herstellung bzw. der Montage bei gleichzeitiger Gewichtsreduktion der Abschleppvorrichtung erlaubt. Der Schaft und die Schaftaufnahme können über eine Schraubverbindung oder durch eine Schnappverbindung lösbar verbunden sein. Der Aufbau einer entsprechenden Schnappverbindung ist der DE 100 51 323 B4 beispielhaft zu entnehmen. Beide Fügeverfahren ermöglichen eine einfache Verbindung des Schaftes mit der Schaftaufnahme, die auch von ungeschulten Bedienern der Abschleppvorrichtung einfach und schnell durchzuführen ist.

Zusätzlich kann ein Verlängerungselement vorgesehen sein, das den Schaft in seiner Längsrichtung verlängert und innerhalb der Schaftaufnahme gehaltert ist. Durch das Verlängerungselement kann der mit der Schaftaufnahme zu verbindende Schaft verkürzt ausgebildet werden für den Fall, dass aufgrund der Dimensionierung des energieabsorbierenden Elements der Schaft ansonsten eine für den Bediener der Abschleppvorrichtung unhandliche Länge erreicht. Der Schaft und das Verlängerungselement bzw. die Verriegelungselemente stehen in Wirkverbindung zueinander, so dass bei der Verbindung des Schafts mit der Schaftaufnahme ein Form- und/oder Kraftschluss zwischen dem Gegenelement dem Schaft und dem Verlängerungselement herstellbar ist.

Vorzugsweise weist der Schaft eine Öse, ein Einhängeauge oder einen Haken auf. Die Öse, das Einhängeauge oder der Haken befindet sich vorzugsweise an dem Ende des Schaftes, der dem Bereich entgegengesetzt ist der in die Schaftaufnahme eingeführt wird. Über die Öse, das Einhängeauge oder den Haken kann eine Abschleppstange bzw. ein Abschleppseil mit der Abschleppvorrichtung verbunden werden.

Weiterhin Teil der Erfindung ist ein Karosserieelement mit einer Abschleppvorrichtung nach einem der Ansprüche 1 bis 11. Das Karosserieelement kann ein Längsträger oder ein Querträger oder ein energieabsorbierendes Element des Kraftfahrzeugs sein. Energieabsorbierende Elemente umfassen Crashboxen, Kunststoffcrashboxen, Absorptionsvorrichtungen, Auffahrelemente, Opferelemente, Schutzstrukturen, aufprallabsorbierende Komponenten und/oder Absorberelemente. Vorzugsweise sind die energieabsorbierenden Elemente aus einem Faserverbundwerkstoff gebildet. Weiter vorzugsweise aus einem Faserverbundwerkstoff mit einer polymeren Matrix. Noch weiter vorzugsweise aus einem Kohlenstofffasergewebe und/oder einem Glasfasergewebe und/oder einem Aramidfasergewebe.

Weiterer Teil der Erfindung ist ein Kraftfahrzeug mit einer Abschleppvorrichtung bzw. einem Karosserieelement nach einem der Ansprüche 1 bis 14.

Zum Zusammenbau der Abschleppvorrichtung ist folgendes Verfahren anzuwenden:
Verfahren zum Zusammenbau einer Abschleppvorrichtung für ein Kraftfahrzeug nach einem der Ansprüche 1 bis 11 umfassend die folgenden Schritte:
   a) Einführen eines Schafts in eine Schaftaufnahme die mindestens eine Aussparung aufweist, die von mindestens einem Verriegelungselement durchfasst ist, wobei dem Verriegelungselement eine Verriegelungselementaufnahme zugeordnet ist, die in einem Gegenelement ausgebildet ist, das mit dem Kraftfahrzeug verbindbar ist
   b) lösbares Verbinden des Schafts mit der Schaftaufnahme, wobei der Schaft und das Verriegelungselement derart zusammenwirken, dass ein Form- und/oder Kraftschluss zwischen dem Gegenelement und dem Schaft hergestellt wird.

Das Gegenelement ist dabei vorzugsweise mit einem Längsträger und/oder einem energieabsorbierenden Element eines Kraftfahrzeugs verbunden.

### Ausführungsbeispiele:

Im Folgenden wird die Erfindung anhand einer lediglich ein Ausführungsbeispiel darstellenden Zeichnung erläutert. Es zeigen schematisch:
- Fig. 1: eine Abschleppvorrichtung des Stands der Technik
- Fig. 2: eine Detaildarstellung der Abschleppvorrichtung aus Fig. 1
- Fig. 3: eine Schnittdarstellung einer erfindungsgemäßen Abschleppvorrichtung
- Fig. 4: eine weitere Schnittdarstellung einer erfindungsgemäßen Abschleppvorrich- tung
- Fig. 5 bis 8: Verriegelungselemente bzw. Verriegelungselementanordnungen einer erfin- dungsgemäßen Abschleppvorrichtung
- Fig. 9: eine weitere Schnittdarstellung einer erfindungsgemäßen Abschleppvorrich- tung
- Fig. 10: eine weitere Schnittdarstellung einer erfindungsgemäßen Abschleppvorrich- tung
- Fig. 11: eine weitere Schnittdarstellung einer erfindungsgemäßen Abschleppvorrich- tung bei einem Crashfall
- Fig. 12: eine Schnittdarstellung einer erfindungsgemäßen Abschleppvorrichtung mit einem energieabsorbierenden Element

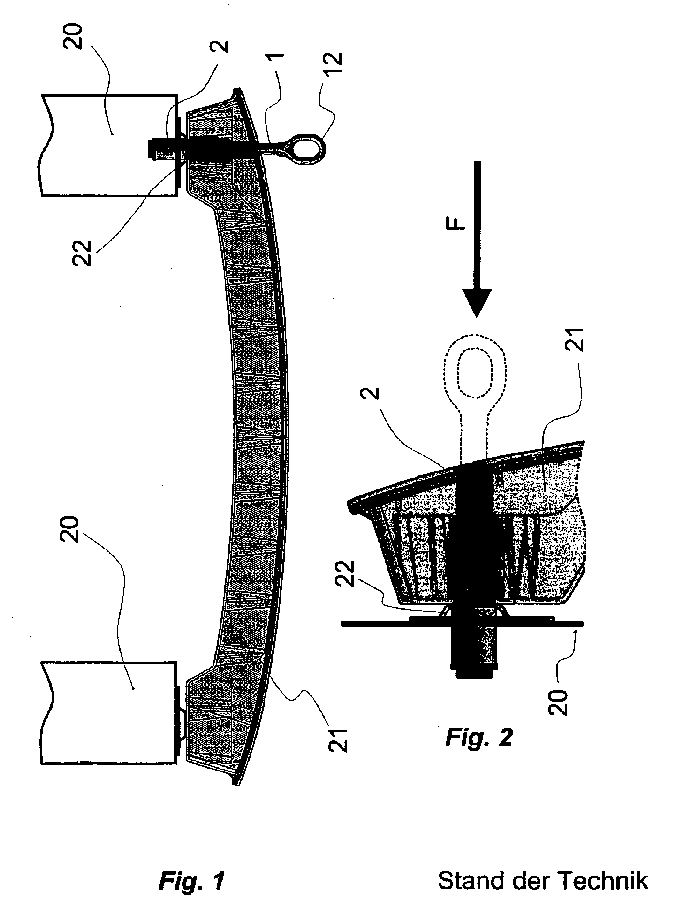

Die Figur 1 zeigt eine Darstellung einer Abschleppvorrichtung des Stands der Technik. Die Abschleppvorrichtung ist durch ein energieabsorbierendes Element 21 geführt, das über eine Prallplatte 22 mit einem Längsträger 20 eines Kraftfahrzeugs verbunden ist. Das energieabsorbierende Element 21 erstreckt sich dabei im Wesentlichen quer zur Kraftfahrzeuglängsrichtung. Die Abschleppvorrichtung weist einen Schaft 1 mit einem Einhängeauge 12 auf, das sich an dem Ende des Schaftes 1 befindet der dem Bereich entgegengesetzt ist der in eine Schaftaufnahme 2 einführbar ist. Die Abschleppvorrichtung befindet sich auf der Seite des Fahrzeuges auf der sich der Beifahrersitz befindet.

Die Figur 2 verdeutlicht, dass die Schaftaufnahme 2 (vergrößerte Darstellung aus Fig. 1 -Schaft und Einhängeauge gestrichelt angedeutet) die bei einem Unfall bzw. Crash auf die Schaftaufnahme 2 wirkende Kraft F direkt auf den Längsträger 20 überträgt. Hierdurch kann die Funktion des als Crashbox 21 ausgebildeten energieabsorbierenden Elements 21 nachteilig beeinflusst werden. Die Crashbox 21, die sich im Crashfall verformen und die eingeleitete Energie teilweise oder ganz vernichten soll, wird am Falten gehindert und kann so eine Beschädigung der angrenzenden Karosserie (Längsträger 20 oder auch Querträger) nicht verhindern.

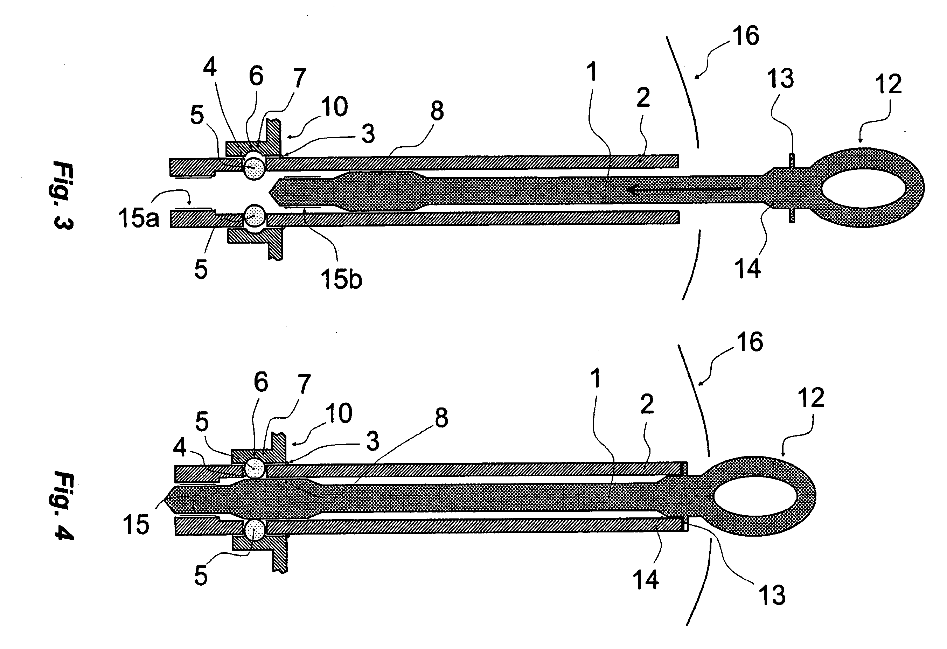

Die Figur 3 zeigt eine Schnittdarstellung einer erfindungsgemäßen Abschleppvorrichtung für ein Kraftfahrzeug mit einem Schaft 1 und mit einer Schaftaufnahme 2. Der Schaft 1 ist lösbar mit der Schaftaufnahme 2 verbindbar. Die Schaftaufnahme 2 weist Aussparungen 4 auf, die von als Sperrkugeln ausgebildeten Verriegelungselementen 5 durchfasst sind. Den Verriegelungselementen 5 sind Verriegelungselementaufnahmen 6 zugeordnet, die in einem mit dem Kraftfahrzeug verbindbaren Gegenelement 7 ausgebildet sind. Bei der Verbindung des Schafts 1 mit der Schaftaufnahme 2 ist ein Form- und/oder Kraftschluss zwischen dem Gegenelement 7 und dem Schaft 1 herstellbar. Der Schaft 1 weist ein Einhängeauge 12 zur Aufnahme einer Abschleppstange oder eines Abschleppseils auf. Weiterhin denkbar ist eine Öse oder einen Haken zu vorgenanntem Zweck vorzusehen. Unterhalb des Einhängeauges 12 befindet sich ein Anschlag 13 und eine Schaftabstützung 14 die mit dem Schaft einstückig ausgebildet ist. Der Schaft 1 weist ein Außengewinde 15b auf, dem ein Innengewinde 15a der Schaftaufnahme zugeordnet ist. Weiterhin weist der Schaft 1 einen Vorsprung 8 bzw. eine Querschnittsveränderung 8 auf. Der Vorsprung 8 ist so ausgebildet, dass dieser die Verriegelungselemente 5 in den Aussparungen 4 verschieben kann sobald der Vorsprung 8 die Verriegelungselemente 5 erreicht. Der Schaft 1 ist als ein Drehteil ausgebildet, so dass die Außenkonturen des Schafts 1 mit dem spanenden Verfahren des Drehens hergestellt werden kann. Lediglich das Einhängeauge 12 wird in einem anschließenden Fügeverfahren mit dem Schaft 1 verbunden. Die Abschleppvorrichtung weist ein Führungselement 10 auf, das der Fixierung der Schaftaufnahme 2 im normalen Fahrbetrieb (Schaft 1 und Schaftaufnahme 2 sind nicht miteinander verbunden) des Kraftfahrzeugs dient. Das Führungselement 10 ist mit einem Karosserieelement (hier nicht näher dargestellt) verbindbar. Das Führungselement 10 und die Schaftaufnahme 2 sind über ein Verbindungsmittel 3 verbunden, dass als ein Dichtring 3 ausgebildet ist. Der Dichtring 3 fixiert im normalen Fahrbetrieb des Kraftfahrzeugs die Schaftaufnahme 2 in dem Führungselement 10 und dichtet gleichzeitig den dahinter befindlichen Bereich ab. Nicht näher dargestellte Varianten des Verbindungsmittels 3 umfassen eine Klebstoffschicht, eine Einsteckhülse, eine Klipsverbindung, ein Kunststoffgewinde, eine Lötung oder Kombinationen der vorgenannten Möglichkeiten. Das Führungselement 10 ist einstückig mit dem Gegenelement 7 verbunden. Nicht näher dargestellt ist ein energieabsorbierende Element 21, das zwischen dem Gegenelement 7 und einer Karosserieverkleidung 16 angeordnet ist und die Schaftaufnahme 2 umgibt.

Die Figur 4 zeigt ebenfalls einen Längsschnitt einer erfindungsgemäßen Abschleppvorrichtung. Der Schaft 1 ist jetzt über die Schraubverbindung 15 lösbar mit der Schaftaufnahme 2 verbunden. Denkbar wäre ebenfalls eine Schnappverbindung zu diesem Zweck vorzusehen. Der Vorsprung 8 des Schafts 1 verschiebt die Verriegelungselemente 5 bzw. Sperrkugeln 5 innerhalb der Aussparung 4, bis diese an den ihnen zugeordneten Verriegelungselementaufnahmen 6 anliegen. So entsteht ein Form- und/oder Kraftschluss zwischen dem Gegenelement 7 und dem Schaft 1. Die Schaftaufnahme 2, die Verriegelungselemente 5 und das Gegenelement 7 sind zudem über einen Formschluss miteinander verbunden. Das Gegenelement 7 ist mit einem nicht näher dargestellten Karosserieelement verbunden, so dass die beim Abschleppbetrieb auf den Schaft 1 wirkende Kraft auf Schaftaufnahme 2, Gegenelement 7 und Karosserieelement übertragen wird. Das an dem Schaft 1 befindliche Einhängeauge 12 ragt dabei aus der Karosserieverkleidung 16 (hier eine Stoßfängerabdeckung) heraus. Der Einschraubvorgang des Schafts 1 wird durch den Anschlag 13 gestoppt. Die Schaftabstützung 14 sorgt zudem dafür, dass sich der Schaft 1 mit geringem Spiel in der Schaftaufnahme 2 befindet.

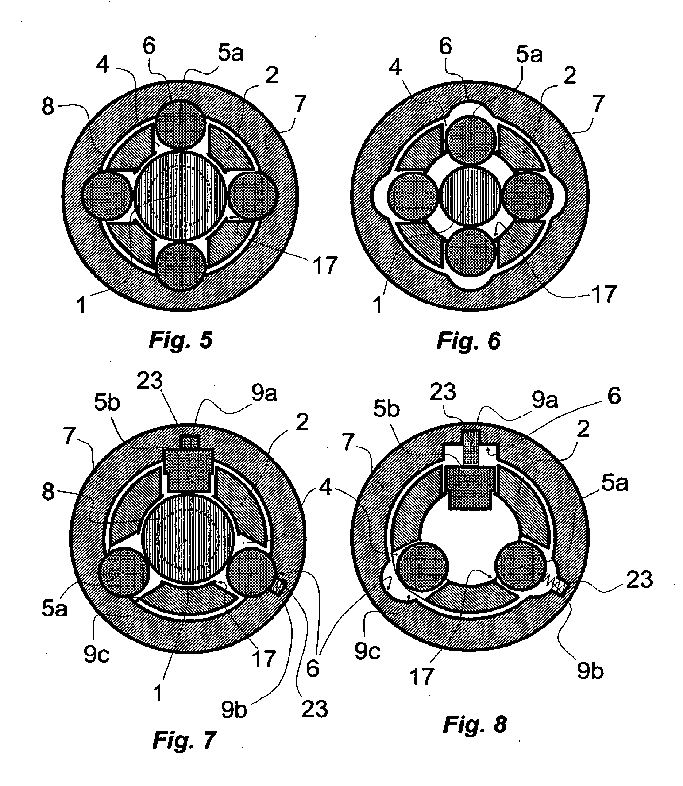

Die Figur 5 zeigt einen Querschnitt einer erfindungsgemäßen Abschleppvorrichtung im Bereich der Verriegelungselemente 5 die hier als Sperrkugeln 5a ausgebildet sind. Der Schnitt zeigt ebenfalls den mit der Schaftaufnahme 2 verbundenen Schaft 1. Der Vorsprung 8 bzw. die Querschnittsveränderung 8 auf dem Schaft 1 ist so ausgebildet, dass dieser die Verriegelungselemente 5 in den Aussparungen 4 verschoben hat sobald der Vorsprung 8 die Verriegelungselemente 5 erreicht hat. Die Verriegelungselemente 5 bzw. Sperrkugeln 5a innerhalb der Aussparung 4 liegen an den ihnen zugeordneten Verriegelungselementaufnahmen 6 an. So entsteht ein Form- und/oder Kraftschluss zwischen dem Gegenelement 7 und dem Schaft 1. Im Rahmen der Erfindung ist auch, dass die Verriegelungselemente 5 nicht mit dem Gegenelement 7 verspannt sind. Die Schaftaufnahme 2 weist Positionierelement 17 auf, deren Funktion in Figur 6 näher erläutert wird.

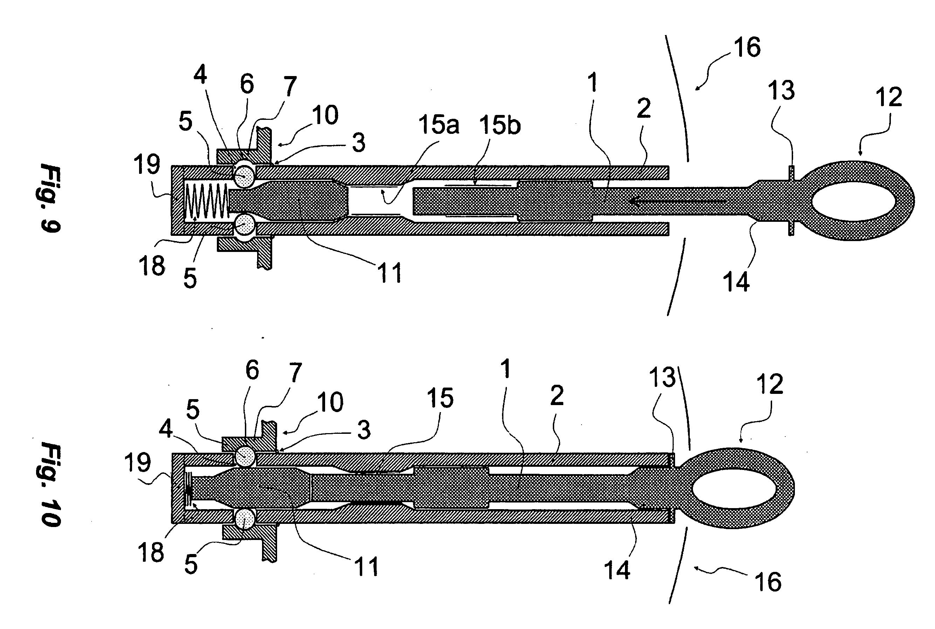

Die Figur 6 zeigt einen Querschnitt durch eine erfindungsgemäße Abschleppvorrichtung, wobei der Schaft 1 nicht mit der Schaftaufnahme 2 verbunden ist (entspricht Einbauzustand aus Fig. 3 bzw. Fig. 9). Die als Sperrkugeln 5a ausgebildeten Verriegelungselemente 5 sind so auf die Aussparung 4 und den Schaft 1 abgestimmt, dass diese fast vollständig innerhalb der Aussparung 4 aufgenommen werden. Damit die Verriegelungselemente 5 bzw. die Sperrkugeln 5a nicht aus der Aussparung 4 heraus in das Innere der Schaftaufnahme 2 fallen sobald der Schaft 1 aus der Schaftaufnahme 2 genommen wird, sind Positionierelemente 17 vorgesehen, die die Verriegelungselemente 5 innerhalb der Aussparung 4 haltern. Die Positionierelemente 17 stellen eine Querschnittsverjüngung der Aussparung 4 dar und lassen sich einfach und kostengünstig, beispielsweise beim Bohren oder Fräsen der Aussparung 4, herstellen. Die Verriegelungselemente 5 bzw. Sperrkugeln 5a sind somit zwar noch frei beweglich innerhalb der Aussparung und können diese zumindest teilweise in Richtung hin zu den Verriegelungselementaufnahmen 6 verlassen, können jedoch nicht aus den Aussparungen 4 herausfallen.

Die Figur 8 zeigt als Verriegelungselemente 5 neben Sperrkugeln 5a auch einen Sperrstift 5b. Die Verriegelungselemente 5 werden neben den Positionierelemente 17 auch durch weitere Positionierelemente 9 innerhalb der Aussparung 4 gehaltert. Ein elastisches Element 9a aus einem geschäumten Kunststoff wirkt mit dem Positionierelement 17 im Bereich des Innenumfangs der rohrförmigen Schaftaufnahme 2 zusammen und hält das Verriegelungselement 5b in Position. Eine Alternative stellt ein Federelement 9b dar, dass eine Sperrkugel 5a in gleicher Weise in Position hält. Das kostengünstigste und sehr einfach zu montierende Positionierelement 9 wird durch ein elastisches Kunststoffband 9c gebildet. Vor der Fixierung der Schaftaufnahme 2 in dem Führungselement 10 (hier nicht näher dargestellt) werden von der Außenseite der Schaftaufnahme 2 die Verriegelungselemente 5 in die Aussparungen 4 eingesetzt. Im Folgenden wird das elastische Kunststoffband (z.B. ein flaches Gummiband) von außen über die Aussparungen 4 gezogen und hält somit die Verriegelungselemente in Position. Vorteilhaft können in allen voran genannten Fällen die Verriegelungselemente 5 zum einen nicht aus den Aussparungen 4 heraus fallen und zum anderen keine störenden Geräusche, insbesondere Klappergeräusche während des Fahrbetriebs verursachen.

Die Figur 7 zeigt die in Figur 8 dargestellte Anordnung von Verriegelungselementen 5 und Positionierelementen 9, 17 im Abschleppbetrieb des Kraftfahrzeugs, also wenn Schaft 1 und Schaftaufnahme 2 lösbar verbunden sind. Die weiteren Positionierelemente 9a, b sind gestaucht in Aufnahmen 23 im Bereich der Verriegelungselementaufnahmen 6 aufgenommen oder liegen flächig (Positionierelement 9c) zwischen Verriegelungselement 5 und Verriegelungselementaufnahme 6 an.

Die Figur 9 zeigt eine weitere Schnittdarstellung einer erfindungsgemäßen Abschleppvorrichtung. Der Schaft 1 wird durch ein zusätzliches Verlängerungselement 11 in seiner Längsrichtung verlängert. Das Verlängerungselement 11 ist innerhalb der Schaftaufnahme 2 gehaltert und muss daher nicht von dem Bediener der Abschleppvorrichtung in die Schaftaufnahme 2 eingesetzt werden. Der Schaft 1 weist ein Außengewinde 15b auf, dem ein Innengewinde 15a der Schaftaufnahme 2 zugeordnet ist. Im normalen Fahrbetrieb (Schaft 1 und Schaftaufnahme 2 sind nicht miteinander verbunden) sorgt eine Druckfeder 18 dafür, dass das Verlängerungselement 11 so innerhalb der Schaftaufnahme 2 gehaltert wird, dass die Verriegelungselemente 5 nicht an den ihnen zugeordneten Verriegelungselementaufnahmen 6 anliegen. Das Verriegelungselement 11 und die Druckfeder 18 werden bei der Montage der Abschleppvorrichtung in die Schaftaufnahme 2 eingeführt und die Schaftaufnahme 2 anschließend mit einem Abschlusselement 19 verschlossen. Vorteilhafterweise sorgt das Verlängerungselement 11 zudem dafür, dass die Verriegelungselemente 5 nicht aus der Aussparung heraus fallen können.

Die Figur 10 zeigt ebenfalls einen Längsschnitt einer erfindungsgemäßen Abschleppvorrichtung. Der Schaft 1 ist jetzt über die Schraubverbindung 15 lösbar mit der Schaftaufnahme 2 verbunden. Der Schaft 1 hat das Verlängerungselement 11 soweit in Längsrichtung der Schaftaufnahme 2 verlagert, dass das Verlängerungselement 11 die Verriegelungselemente 5 bzw. Sperrkugeln 5 innerhalb der Aussparung 4 verschoben hat bis diese an den ihnen zugeordneten Verriegelungselementaufnahmen 6 anliegen. Das Verlängerungselement 11 weist hierfür ebenfalls einen Vorsprung bzw. eine Querschnittsveränderung auf. So entsteht ein Form- und/oder Kraftschluss zwischen dem Gegenelement 7, dem Schaft 1 und dem Verlängerungselement 11. Der Kraftfluss von Schaft 1 zu Verriegelungselement 5 bzw. Gegenelement 7 erfolgt dabei über die Schaftaufnahme 2. Das Gegenelement 7 und das Führungselement 10 sind mit einem nicht näher dargestellten Karosserieelement (hier einem Querträger) verbunden, so dass die beim Abschleppbetrieb auf den Schaft 1 wirkende Kraft auf Schaftaufnahme 2, das Verlängerungselement 11, das Gegenelement 7 und das Karosserieelement übertragen wird. Das an dem Schaft 1 befindliche Einhängeauge 12 ragt dabei aus der Karosserieverkleidung 16 (hier eine Stoßfängerverkleidung aus Kunststoff) heraus.

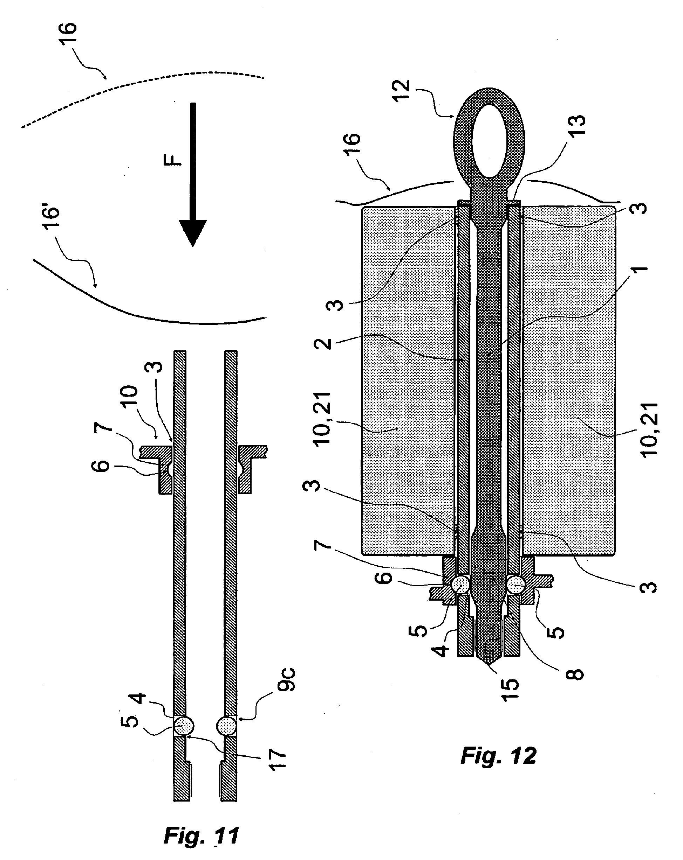

Die Figur 11 zeigt die Schaftaufnahme 2 einer erfindungsgemäßen Abschleppvorrichtung ohne den Schaft 1. Eine durch einen Unfall verursachte einwirkende Kraft F verschiebt zunächst eine Karosserieverkleidung 16 in Position 16' in Richtung auf die Schaftaufnahme 2 zu. Die einwirkende Kraft F übersteigt die Festigkeit der durch das Verbindungsmittel 3 realisierten Fügeverbindung zwischen der Schaftaufnahme 2 und dem Führungselement 10. Das Verbindungsmittel 3 haltert im normalen Fahrbetrieb des Kraftfahrzeugs die Schaftaufnahme 2 in dem Führungselement 10. Im Crashfall bildet das Verbindungsmittel 3 jetzt eine Sollbruchstelle. Das Verbindungsmittel 3 bildet daher eine Sollbruchstelle für den eingetretenen Fall eines Crashs. Die nun frei bewegliche Schaftaufnahme 2 kann durch das Führungselement 10 bzw. das Gegenelement 7 hindurch gleiten, da die Verriegelungselemente 5 nicht an den Verriegelungselementaufnahmen 6 anliegen. Innerhalb des mit dem Gegenelement 7 bzw. dem Führungselement 10 verbundenen Karosserieelements (hier nicht näher dargestellt) ist eine entsprechende Öffnung vorgesehen, die die Schaftaufnahme 2 aufnimmt bzw. in welche die Schaftaufnahme 2 eintauchen kann. Ein hier nicht näher dargestelltes energieabsorbierendes Element 21, das zwischen dem Gegenelement 7 und der Karosserieverkleidung 16 angeordnet ist und die Schaftaufnahme 2 umgibt, kann die einwirkende Crashenergie gleichmäßig aufnehmen und durch Zusammenfalten das Karosserieelement vor einer Deformation bzw. Beschädigung schützen. Die Schaftaufnahme 2 der erfindungsgemäßen Abschleppvorrichtung kann die einwirkende Kraft F nicht auf das Karosserieelement übertragen.

Die Figur 12 zeigt eine Schnittdarstellung einer erfindungsgemäßen Abschleppvorrichtung. Die Schaftaufnahme 2 ist innerhalb eines energieabsorbierenden Elements 21 fixiert. Das Führungselement 10 ist daher gleichzeitig als energieabsorbierendes Element 21 ausgebildet. Das Führungselement 10 / energieabsorbierende Element 21 ist mit dem Gegenelement 7 verbunden, welches wiederum mit einem nicht näher dargestellten Karosserieelement verbunden ist. Das Führungselement 10 ist über ein Verbindungsmittel 3 mit der Schaftaufnahme 2 verbunden. Als Verbindungsmittel 3 zwischen dem Führungselement 10 / energieabsorbierenden Element 21 und der Schaftaufnahme 2 sind mehrere Klebstoffschichten 3 vorgesehen. Im Crashfall lösen sich die Klebstoffschichten 3 vorzugsweise. Die Verbindung zwischen energieabsorbierendem Element 21 und Schaftaufnahme 2 kann in diesem Fall jedoch auch bestehen bleiben, da (bei nicht mit der Schaftaufnahme 2 verbundenem Schaft 1) die Schaftaufnahme 2 (entsprechend dem Verformungsweg) zusammen mit dem energieabsorbierenden Element 21 nach hinten und durch das Gegenelement 7 verlagert werden kann.

## Patentansprüche

1. Abschleppvorrichtung für ein Kraftfahrzeug mit,
einem Schaft (1) und
einer Schaftaufnahme (2),
wobei der Schaft (1) lösbar mit der Schaftaufnahme (2) verbindbar ist,
wobei
- die Schaftaufnahme (2) mindestens eine Aussparung (4) aufweist, die von mindestens einem Verriegelungselement (5) durchfasst ist, und
- dem Verriegelungselement (5) eine Verriegelungselementaufnahme (6) zugeordnet ist,
- wobei die Verriegelungselementaufnahme (6) in einem mit dem Kraftfahrzeug verbindbaren Gegenelement (7) ausgebildet ist und,
- wobei bei der Verbindung des Schafts (1) mit der Schaftaufnahme (2) ein Form- und/oder Kraftschluss zwischen dem Gegenelement (7) und dem Schaft (1) herstellbar ist, und wobei
ein Führungselement (10) vorgesehen ist, dass der Fixierung der Schaftaufnahme (2) dient, wobei das Führungselement (10) und die Schaftaufnahme (2) über ein Verbindungsmittel (3) verbunden sind, **dadurch gekennzeichnet, dass** das Verbindungsmittel (3) im normalen Fahrbetrieb des Kraftfahrzeugs die Schaftaufnahme (2) in dem Führungselement (10) fixiert und im Crashfall das Verbindungsmittel (3) eine Sollbruchstelle bildet.

2. Abschleppvorrichtung nach Anspruch 1, **dadurch gekennzeichnet, dass** das mindestens eine Verriegelungselement (5) als Sperrkugel (5a) bzw. als Sperrstift (5b) ausgebildet ist.

3. Abschleppvorrichtung nach einem der vorstehenden Ansprüche, **dadurch gekennzeichnet, dass** der Schaft (1) mindestens einen Vorsprung (8) und/oder eine Querschnittveränderung (8) aufweist der/die das Verriegelungselement (5) in der Aussparung (4) verschiebt/verschieben.

4. Abschleppvorrichtung nach einem der vorstehenden Ansprüche, **dadurch gekennzeichnet, dass** das mindestens eine Verriegelungselement (5) über mindestens ein Positionierelement (9, 17) innerhalb der Aussparung (4) gehaltert ist.

5. Abschleppvorrichtung nach einem der vorstehenden Ansprüche, **dadurch gekennzeichnet, dass** das Verbindungsmittel (3) eine Klebstoffschicht und/oder ein Dichtring und/oder eine Einsteckhülse und/oder eine Klipsverbindung und/oder ein Kunststoffgewinde und/oder eine Lötung ist.

6. Abschleppvorrichtung nach einem der vorstehenden Ansprüche, **dadurch gekennzeichnet, dass** das Führungselement (10) mit dem Gegenelement (7) verbunden ist.

7. Abschleppvorrichtung nach einem der vorstehenden Ansprüche, **dadurch gekennzeichnet, dass** der Schaft (1) und die Schaftaufnahme (2) über eine Schraubverbindung oder durch eine Schnappverbindung lösbar verbunden sind.

8. Abschleppvorrichtung nach einem der vorstehenden Ansprüche, **dadurch gekennzeichnet, dass** zusätzlich ein Verlängerungselement (11) vorgesehen ist, das den Schaft (1) in seiner Längsrichtung verlängert und innerhalb der Schaftaufnahme (2) gehaltert ist.

9. Abschleppvorrichtung nach einem der vorstehenden Ansprüche, **dadurch gekennzeichnet, dass** der Schaft (1) eine Öse (12), ein Einhängeauge (12) oder einen Haken (12) aufweist.

10. Karosserieelement mit einer Abschleppvorrichtung nach einem der vorstehenden Ansprüche.

11. Karosserieelement nach Anspruch 10 **dadurch gekennzeichnet, dass** das Karosserieelement ein Längsträger (20), ein Querträger oder ein energieabsorbierendes Element (21) ist.

12. Karosserieelement nach Anspruch 11, **dadurch gekennzeichnet, dass** das energieabsorbierende Element (21) aus einem Faserverbundwerkstoff gebildet ist.

13. Kraftfahrzeug mit einer Abschleppvorrichtung bzw. einem Karosserieelement nach einem der vorstehenden Ansprüche.

## Claims

1. Towing device for a motor vehicle having a shank (1) and a shank receptacle (2), it being possible for the shank (1) to be connected releasably to the shank receptacle (2),
- the shank receptacle (2) having at least one cut-out (4) which is penetrated by at least one locking element (5), and
- the locking element (5) being assigned a locking-element receptacle (6),
- the locking-element receptacle (6) being formed in a counter-element (7) which can be connected to the motor vehicle, and
- it being possible for a positive locking and/or non-positive connection to be produced between the counter-element (7) and the shank (1) during the connection of the shank (1) to the shank receptacle (2), and
a guide element (10) being provided that serves to fix the shank receptacle (2), the guide element (10) and the shank receptacle (2) being connected via a connecting means (3), **characterized in that**, in the normal driving mode of the motor vehicle, the connecting means (3) fixes the shank receptacle (2) in the guide element (10) and, in the event of a crash, the connecting means (3) forms a predetermined break point.

2. Towing device according to Claim 1, **characterized in that** the at least one locking element (5) is configured as a locking ball (5a) or as a locking pin (5b).

3. Towing device according to one of the preceding claims, **characterized in that** the shank (1) has at least one projection (8) and/or one cross-sectional change (8) which displace/displaces the locking element (5) in the cut-out (4).

4. Towing device according to one of the preceding claims, **characterized in that** the at least one locking element (5) is secured within the cut-out (4) via at least one positioning element (9, 17).

5. Towing device according to one of the preceding claims, **characterized in that** the connecting means (3) is an adhesive layer and/or a sealing ring and/or a plug-in sleeve and/or a clip connection and/or a plastic thread and/or a soldered joint.

6. Towing device according to one of the preceding claims, **characterized in that** the guide element (10) is connected to the counter-element (7).

7. Towing device according to one of the preceding claims, **characterized in that** the shank (1) and the shank receptacle (2) are connected releasably via a screwed connection or by way of a snap-action connection.

8. Towing device according to one of the preceding claims, **characterized in that** an extension element (11) is additionally provided which extends the shank (1) in its longitudinal direction and is secured within the shank receptacle (2).

9. Towing device according to one of the preceding claims, **characterized in that** the shank (1) has an eye (12), a hook-in eye (12) or a hook (12).

10. Vehicle-body element having a towing device according to one of the preceding claims.

11. Vehicle-body element according to Claim 10, **characterized in that** the vehicle-body element is a longitudinal carrier (20), a crossmember or an energy-absorbing element (21).

12. Vehicle-body element according to Claim 11, **characterized in that** the energy-absorbing element (21) is formed from a fibre composite material.

13. Motor vehicle having a towing device and a vehicle-body element according to one of the preceding claims.

## Revendications

1. Dispositif de remorquage pour un véhicule automobile, comprenant une broche (1) etun logement de broche (2), dans lequel la broche (1) peut être assemblée de façon amovible au logement de broche (2), dans lequel
- le logement de broche (2) présente au moins un évidement (4), qui est traversé par au moins un élément de verrouillage (5), et
- un logement d'élément de verrouillage (6) est associé à l'élément de verrouillage (5),
- dans lequel le logement d'élément de verrouillage (6) est formé dans un élément opposé (7) pouvant être assemblé au véhicule automobile, et
- dans lequel, lors de l'assemblage de la broche (1) avec le logement de broche (2), on peut réaliser un assemblage par un accouplement mécanique et/ou par adhérence entre l'élément opposé (7) et la broche (1) et
- dans lequel il est prévu un élément de guidage (10), qui sert à la fixation du logement de broche (2),
- dans lequel l'élément de guidage (10) et le logement de broche (2) sont assemblés par un moyen d'assemblage (3),
**caractérisé en ce que** le moyen d'assemblage (3) fixe le logement de broche (2) dans l'élément de guidage (10) en usage de circulation normal du véhicule automobile et le moyen d'assemblage (3) forme une zone de rupture en cas de collision.

2. Dispositif de remorquage selon la revendication 1, **caractérisé en ce que** ledit au moins un élément de verrouillage (5) est constitué par une bille d'arrêt (5a) ou une tige d'arrêt (5b).

3. Dispositif de remorquage selon l'une quelconque des revendications précédentes, **caractérisé en ce que** la broche (1) présente au moins une saillie (8) et/ou une variation de section transversale (8), qui déplace/déplacent l'élément de verrouillage (5) dans l'évidement (4).

4. Dispositif de remorquage selon l'une quelconque des revendications précédentes, **caractérisé en ce que** ledit au moins un élément de verrouillage (5) est maintenu à l'intérieur de l'évidement (4) par au moins un élément de positionnement (9, 17).

5. Dispositif de remorquage selon l'une quelconque des revendications précédentes, **caractérisé en ce que** le moyen d'assemblage (3) est une couche de colle et/ou une bague d'étanchéité et/ou une douille insérée et/ou un assemblage à déclic et/ou un filet en matière plastique et/ou un brasage.

6. Dispositif de remorquage selon l'une quelconque des revendications précédentes, **caractérisé en ce que** l'élément de guidage (10) est assemblé à l'élément opposé (7).

7. Dispositif de remorquage selon l'une quelconque des revendications précédentes, **caractérisé en ce que** la broche (1) et le logement de broche (2) sont assemblés de façon amovible par un assemblage vissé ou par un assemblage à déclic.

8. Dispositif de remorquage selon l'une quelconque des revendications précédentes, **caractérisé en ce qu'**il est en outre prévu un élément de prolongement (11), qui prolonge la broche (1) dans sa direction longitudinale et qui est maintenu à l'intérieur du logement de broche (2).

9. Dispositif de remorquage selon l'une quelconque des revendications précédentes, **caractérisé en ce que** la broche (1) présente une oreille (12), un oeillet de suspension (12) ou un crochet (12).

10. Elément de carrosserie avec un dispositif de remorquage selon l'une quelconque des revendications précédentes.

11. Elément de carrosserie selon la revendication 10, **caractérisé en ce que** l'élément de carrosserie est un longeron (20), une traverse ou un élément d'absorption d'énergie (21).

12. Elément de carrosserie selon la revendication 11, **caractérisé en ce que** l'élément d'absorption d'énergie (21) est formé en un matériau composite en fibre.

13. Véhicule automobile avec un dispositif de remorquage ou un élément de carrosserie selon l'une quelconque des revendications précédentes.
